# FASCICULE DE BREVET EUROPEEN

(11) **EP 2 293 422 B1**
(45) Date de publication et mention de la délivrance du brevet: **26.08.2015**
(21) Numéro de dépôt: 10305944.0
(22) Date de dépôt: 02.09.2010
(51) Int. Cl.: H02M 3/135

(54) **Convertisseur d'un courant continu en un autre courant continu avec imbrication de signaux de commande, et système d'alimentation comprenant un tel convertisseur**
Wandler eines Gleichstroms in einen anderen Gleichstrom mit Verschachtelung der Steuersignale und Einspeisungssystem, das einen solchen Wandler umfasst
Converter of one direct current to another direct current with control signal interleaving, and power supply system including such a converter

(30) Priorité: 04.09.2009 FR 0904227
(43) Date de publication de la demande: 09.03.2011
(73) Titulaire: GE Energy Power Conversion Technology Limited, Rugby Warwickshire CV21 1BU (GB)
(72) Inventeur: Gollentz, Bernard, 68360, SOULTZ (FR); Peron, Régis, 90000, BELFORT (FR); Girod, Daniel, 90300, CRAVANCHE (FR)
(74) Mandataire: Serjeants LLP

(56) Documents cités:
- EP-A1- 1 868 279
- BORDRY F ET AL: "CERN-PS Main Power Converter Renovation: How to Provide and Control the Large Flow of Energy for A Rapid Cycling Machine", PARTICLE ACCELERATOR CONFERENCE, 2005. PAC 2005. PROCEEDINGS OF THE KNOXVILLE, TN, USA 16-20 MAY 2005, PISCATAWAY, NJ, USA,IEEE LNKD- DOI:10.1109/PAC.2005.1591556, 16 mai 2005 (2005-05-16), pages 3612-3614, XP010892123, ISBN: 978-0-7803-8859-8

## Description

La présente invention concerne un convertisseur d'un courant continu en un autre courant continu, du type comprenant :
- deux premières bornes, deux deuxièmes bornes,
- deux modules formant un pont en H, chaque module étant connecté entre les deux premières bornes d'une part et une deuxième borne respective d'autre part, chaque module comprenant au moins une branche de commutation, chaque branche de commutation comportant au moins deux interrupteurs électroniques commandables connectés en série entre les premières bornes (40) et reliés entre eux par un point milieu connecté à la deuxième borne correspondante,
- des moyens de commande des interrupteurs électroniques des modules, chacun suivant une loi de commutation.

La présente invention concerne également un système d'alimentation d'une charge comportant un tel convertisseur.

En particulier, l'invention s'applique à des convertisseurs de puissance élevée, typiquement comprise entre 10 MW et 20 MW. De tels convertisseurs et un tel système d'alimentation sont typiquement destinés à alimenter une charge nécessitant d'être alimentée par une alimentation pulsée, telle qu'une bobine de guidage d'un synchrotron à protons par exemple.

Un convertisseur du type précité est décrit dans le document EP 1 868 279 A1. Le convertisseur est utilisé comme variateur de tension entre un condensateur de stockage et la charge à alimenter.

Le courant délivré par un tel convertisseur comporte des harmoniques à basse fréquence, et un tel convertisseur doit alors être associé à un filtre de réduction de ces harmoniques. Un tel filtre limite la bande passante de commande en tension du convertisseur et engendre une augmentation importante des coûts.

Le but de l'invention est de proposer un convertisseur permettant de réduire les harmoniques à basse fréquence du courant délivré.

A cet effet, l'invention a pour objet un convertisseur du type précité, **caractérisé en ce que** les lois de commutation de chacun des modules sont de même fréquence et sont déphasées l'une de l'autre.

Suivant d'autres modes de réalisation, le convertisseur comprend une ou plusieurs des caractéristiques suivantes, prises isolément ou suivant toutes les combinaisons techniquement possibles :
- le déphasage entre les lois de commutation de chacun des modules est égal à 180° ;
- chaque module du pont en H comporte N branches de commutation, N étant strictement supérieur à 1, et les lois de commutation de chacune des N branches du module sont de même fréquence et sont toutes déphasées l'une de l'autre ;
- le déphasage entre les lois de commutation de chacune des N branches du module est égal à 360°/N.

L'invention a également pour objet un système d'alimentation d'une charge, du type comprenant :
- au moins un transformateur de tension alternative relié à un réseau électrique,
- au moins un redresseur de tension connecté en sortie du transformateur de tension,
- au moins un convertisseur tel que défini ci-dessus connecté aux bornes de la charge, au moins un convertisseur étant connecté en sortie du redresseur de tension,
- au moins un condensateur de stockage monté en parallèle du ou des convertisseurs, et
- des moyens de commande du ou des convertisseurs, chacun suivant une loi de commande.

Suivant d'autres modes de réalisation, le système d'alimentation comprend une ou plusieurs des caractéristiques suivantes, prises isolément ou suivant toutes les combinaisons techniquement possibles :
- chaque convertisseur est tel que défini ci-dessus ;
- le système comprend :
   ■ deux transformateurs connectés en parallèle au réseau électrique,
   ■ deux redresseurs, chacun étant connecté en sortie d'un transformateur respectif,
   ■ M convertisseurs, M étant un nombre supérieur ou égal à 4, un unique convertisseur étant connecté en sortie de chaque redresseur, les (M - 2) autres convertisseurs n'étant pas connectés en sortie des redresseurs et étant connectés en série avec les convertisseurs connectés en sortie de chaque redresseur, et
   ■ M condensateurs de stockage ;
- les lois de commande de chacun des deux convertisseurs connectés en sortie des redresseurs sont de même fréquence et sont déphasées l'une de l'autre ;
- le déphasage entre les lois de commande de chacun des deux convertisseurs connectés en sortie des redresseurs est égal à 90° ;
- les lois de commande de chacun des (M - 2) autres convertisseurs sont de même fréquence et sont déphasées l'une de l'autre ;
- le déphasage entre les lois de commande de chacun des autres convertisseurs est égal à 180°/(M - 2).
- les lois de commande d'un des deux convertisseurs connectés en sortie des redresseurs et d'un des (M - 2) autres convertisseurs sont de même fréquence et sont en phase ;
- M est un nombre pair, et les M convertisseurs sont répartis en deux ensembles de convertisseurs, chaque ensemble comportant un convertisseur connecté en sortie d'un redresseur respectif et (M - 2)/2 autres convertisseurs, les M/2 convertisseurs de chaque ensemble étant connectés en série ;
- les lois de commande de chacun des deux ensembles de convertisseurs sont de même fréquence et sont déphasées l'une de l'autre ;
- le déphasage entre les lois de commande de chacun des deux ensembles de convertisseurs est égal à 90°.

Ces caractéristiques et avantages de l'invention apparaîtront à la lecture de la description qui va suivre, donnée uniquement à titre d'exemple, et faite en référence aux dessins annexés, sur lesquels :
- la figure 1 est une représentation schématique d'un système d'alimentation selon l'invention comportant six convertisseurs d'un courant continu en un autre courant continu,
- la figure 2 est un schéma électrique d'un convertisseur de la figure 1,
- la figure 3 est un ensemble de courbes représentant la tension et l'intensité de composantes d'un courant délivré par le convertisseur de la figure 2, sur une courte période de temps,
- la figure 4 est un ensemble de courbes représentant l'intensité du courant en sortie du convertisseur de la figure 2 et l'intensité des composantes de ce courant, sur une période de 2,5 secondes correspondant à une impulsion complète du courant délivrée à la charge par le système d'alimentation,
- les figures 5, 6, 7 et 8 sont respectivement des agrandissements des zones encadrées V, VI, VII et VIII de la figure 4,
- la figure 9 est une représentation spectrale de la tension délivrée par un convertisseur de l'état de la technique,
- la figure 10 est une vue analogue à celle de la figure 9 pour le convertisseur selon l'invention,
- la figure 11 est une vue analogue à celle de la figure 1 selon un deuxième mode de réalisation de l'invention,
- la figure 12 est une courbe représentant la tension délivrée aux bornes de la charge par un système d'alimentation de l'état de la technique, durant l'impulsion de courant, et
- la figure 13 est une vue analogue à celle de la figure 12 pour le système d'alimentation selon le deuxième mode de réalisation de l'invention.

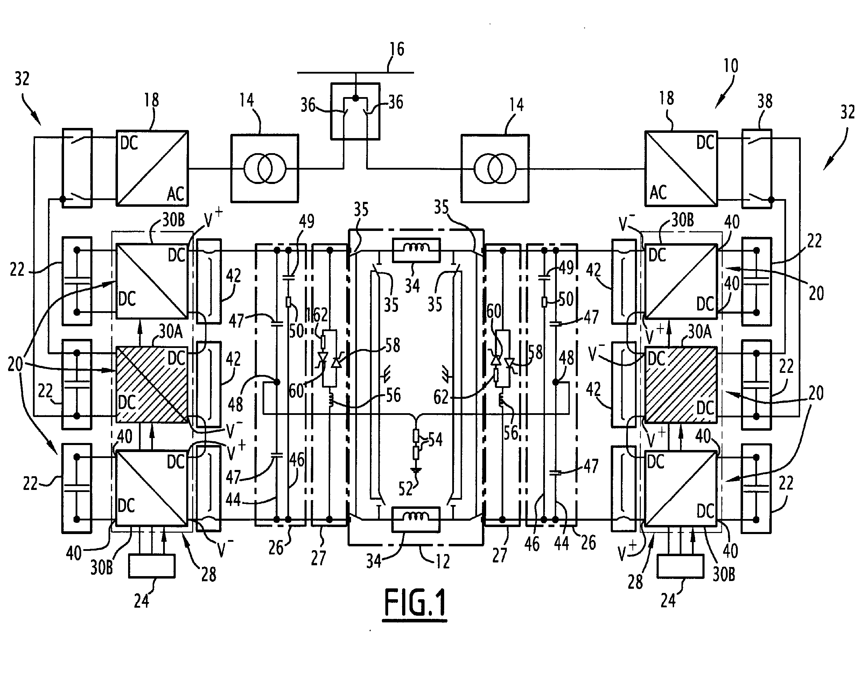

Sur la figure 1, un système 10 d'alimentation d'une charge 12 comprend deux transformateurs de tension alternative 14 reliés à un réseau électrique 16, et deux redresseurs de tension 18, chacun étant connecté en sortie d'un transformateur de tension 14. Le système d'alimentation 10 comporte également M convertisseurs 20 d'un courant continu en un autre courant continu connectés en série aux bornes de la charge 12, et M condensateurs de stockage 22, chacun étant monté en parallèle d'un convertisseur 20 respectif. Le système d'alimentation 10 comporte également des moyens 24 de commande des M convertisseurs 20, chacun suivant une loi de commande propre, deux filtres 26 connectés entre la charge 12 et les convertisseurs 20, et deux dispositifs 27 de décharge de la charge 12 en cas de défaut de celle-ci.

Dans l'exemple de réalisation de la figure 1, le nombre M de convertisseurs et de condensateurs de stockage est un nombre pair supérieur ou égal à 4, par exemple égal à 6. Les M convertisseurs sont répartis en deux ensembles 28 de convertisseurs, chaque ensemble 28 comportant un premier convertisseur 30A dit convertisseur de charge connecté en sortie d'un redresseur 18 respectif et (M/2 - 1) deuxièmes convertisseurs 30B dits convertisseurs flottants. Les convertisseurs flottants 30B ne sont pas connectés directement en sortie des redresseurs. Les M/2 convertisseurs de charge et flottant 20 de chaque ensemble sont connectés en série.

En d'autres termes, le système d'alimentation 10 est formé de deux dispositifs d'alimentation 32 identiques et connectés en parallèle aux bornes de la charge 12, chaque dispositif d'alimentation 32 comportant un transformateur 14, un redresseur 18, un convertisseur de charge 30A et (M/2 - 1) convertisseurs flottants 30B, M/2 condensateurs de stockage 22, un filtre 26, et un dispositif de décharge 27.

La charge 12 comporte une bobine de guidage d'un synchrotron à protons séparée en deux demi-bobines 34, et des relais 35 d'isolement des demi-bobines 34. La charge 12 présente une inductance Lc, par exemple égale à 9 mH, une résistance interne Rc, par exemple égale à 3,2 mΩ, une capacité Cc, par exemple égale à 22 nF, et une résistance d'amortissement pc, par exemple égale à 136 Ω.

Chaque transformateur de tension alternatif 14 est connecté au réseau électrique 16 par l'intermédiaire d'un premier relais 36.

Le réseau électrique 16 est un réseau alternatif polyphasé propre à délivrer au système d'alimentation 10 un courant comportant une pluralité de phases. Le réseau électrique 16 est, par exemple, un réseau triphasé.

Chaque redresseur 18 est un convertisseur d'un courant alternatif d'entrée en un courant continu de sortie, et est connecté en sortie au premier convertisseur 30A correspondant par l'intermédiaire de deuxièmes relais 38 propres à isoler le premier convertisseur 30A de son redresseur 18 respectif en cas de besoin.

Tous les convertisseurs sont identiques dans leur structure, seule leur loi de commande étant propre à chacun.

Chaque convertisseur 20 d'un courant continu en un autre courant continu, également appelé hacheur, comporte deux premières bornes 40 reliées au condensateur de stockage 22 respectif et deux deuxièmes bornes V+, V-. Chaque borne V+ d'un hacheur 20 est connectée à la borne V- d'un hacheur 20 adjacent, les hacheurs 20 étant connectés en série aux bornes de la charge 12. Les deux deuxièmes bornes V+, V- disposées aux extrémités des hacheurs 20 en série, et non connectées à une deuxième borne correspondante d'un autre hacheur, sont connectées aux bornes de la charge 12.

Chaque hacheur 20 est propre à faire varier la tension du courant circulant à travers les deuxièmes bornes V+, V- par rapport au courant circulant à travers les premières bornes 40. Chaque hacheur 20 est réversible, le courant étant propre à circuler depuis le condensateur 22 correspondant vers la charge 12 au cours d'un intervalle de temps et à circuler dans le sens inverse depuis la charge 12 vers le condensateur 22 au cours d'un autre intervalle de temps.

Le système d'alimentation 10 comporte également M shunts commandables 42, chacun étant disposé en parallèle des deuxièmes bornes V+, V- d'un hacheur respectif. Chaque shunt 42 est propre, lorsqu'il est commandé, à mettre en court-circuit les deux deuxièmes bornes V+, V- du hacheur correspondant.

Chaque filtre 26 est agencé entre la charge 12 et un ensemble de convertisseurs 28 respectifs, et comporte une première branche 44 et une deuxième branche 46, les deux branches 44, 46 étant en parallèle l'une de l'autre. La première branche 44 comprend deux condensateurs 47 connectés en série entre les bornes de la charge 12, les deux condensateurs 47 étant connectés entre eux en un point milieu 48. La deuxième branche 46 comprend un condensateur 49 et une résistance 50 connectés en série entre les bornes de la charge 12. Les points milieux 48 de chacune des premières branches 44 des filtres sont connectés entre eux et reliés à une masse électrique 52 par l'intermédiaire de résistances 54.

Le dispositif de décharge 27 est connecté en parallèle de la charge 12 entre ses bornes respectives. Le dispositif de décharge 27 comporte une bobine 56 connectée en série à un ensemble de composants comportant un premier thyristor 58 connecté en parallèle d'un deuxième thyristor 60 et d'une résistance de décharge 62 connectés en série. Les premier 58 et second 60 thyristors sont connectés tête-bêche.

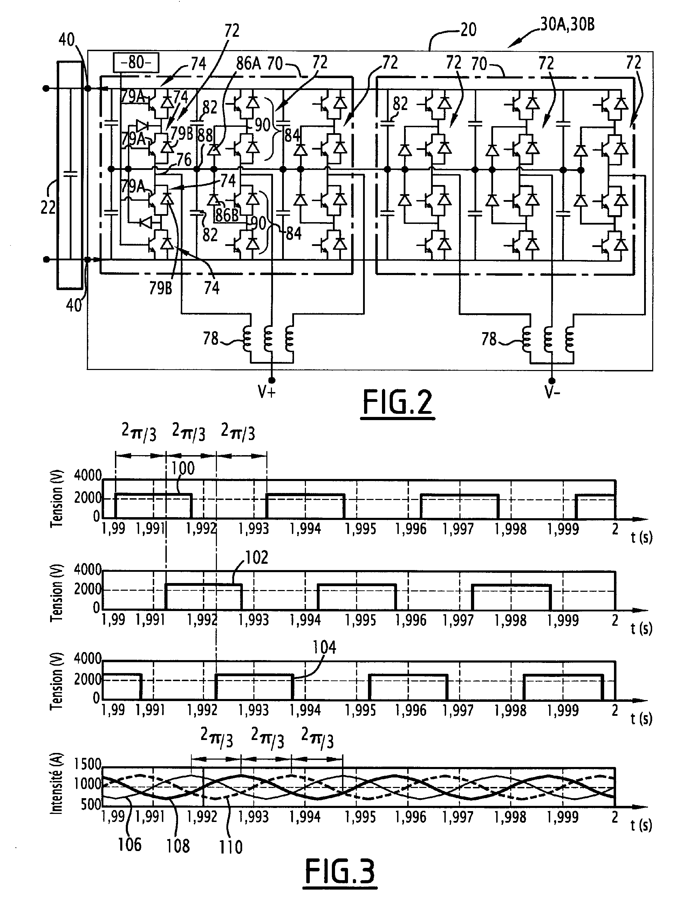

Sur la figure 2, le hacheur 20 comporte deux modules 70 formant un pont en H, chaque module 70 étant connecté entre les deux premières bornes 40 d'une part, et une deuxième borne V+, V- respective d'autre part. Chaque module 70 comprend N branche(s) de commutation 72, de préférence identiques. Chaque branche de commutation 72 comporte au moins deux interrupteurs électroniques commandables 74 connectés en série entre les premières bornes 40 et reliés entre eux par un point milieu 76 connecté à la deuxième borne V+, V-correspondante.

Le hacheur 20 comporte également des moyens 78 de commande des interrupteurs électroniques 74 des modules, chacun suivant une loi de commutation propre.

Dans l'exemple de réalisation de la figure 2, chaque interrupteur électronique 74 est un interrupteur bidirectionnel en courant et unidirectionnel en tension. L'interrupteur électronique 74 comprend un élément semi-conducteur enclenchable et déclenchable 79A et une diode 79B connectée en antiparallèle assurant ainsi des trajets de circulation bidirectionnels de courant lorsque l'élément semi-conducteur 79A est passant. L'élément semi-conducteur 79A est, par exemple, un transistor tel qu'un transistor bipolaire à grille isolée, également appelé transistor IGBT (de l'anglais Insulated Gate Bipolar Transistor). En variante, l'élément semi-conducteur est un thyristor tel qu'un thyristor GTO (de l'anglais Gate Turn Off) ou encore un thyristor IGCT (de l'anglais Integrated Gate Controlled Thyristor).

Les deux composants électroniques 79A, 79B sont unidirectionnels en tension. Un tel assemblage permet de créer un bloc bidirectionnel en courant mais unidirectionnel en tension.

Chaque élément semi-conducteur 79A est relié aux moyens de commande 78, pour recevoir le signal de commande correspondant.

Les lois de commutation de chacun des modules 70 sont de même fréquence F et sont déphasées l'une de l'autre. Le déphasage entre les lois de commutation de chacun des modules 70 est, par exemple, égal à 180°.

Les lois de commutation de chacune des N branches 72 du module sont de même fréquence F et sont déphasées l'une de l'autre. Le déphasage entre les lois de commutation de chacune des N branches 72 du module est, par exemple, égal à 360° / N.

Plus précisément, les lois de commutation sont propres à commander la commutation des interrupteurs électroniques 74 d'une même branche 72 à des instants différents. Les lois de commutation sont propres à commander la commutation des interrupteurs électroniques 74 respectifs à une même fréquence et selon un ordre identique d'une branche 72 à l'autre.

Dans l'exemple de réalisation de la figure 2, N est égal à 3, et le déphasage entre les lois de commutation de chacune des trois branches 72 du module est égal à 120°. Autrement dit, en prenant comme convention que la première branche 72 du module correspond à un angle de 0°, la deuxième branche 72 correspond à un angle de 120° et est donc déphasée de 120° par rapport à la première branche. De manière analogue, la troisième branche 72 du module correspond à un angle de 240° et est donc déphasée de 120° par rapport à la deuxième branche.

L'homme du métier comprendra que les déphasages, exprimés ci-dessus en degré, peuvent être également exprimés en radians, 2π radians étant égal à 360°.

L'homme du métier comprendra que les déphasages entre les lois de commutation exprimés ci-dessus de manière angulaire peuvent également être exprimé de manière temporelle en divisant lesdits déphasages exprimés en radians par une pulsation ω, la pulsation ω étant égale à 2π x F radians/s.

Dans l'exemple de réalisation de la figure 2, chaque branche de commutation 72 forme un onduleur de tension à trois niveaux et comporte deux condensateurs 82, deux bras de commutation 84 et deux diodes 86A, 86B. Les deux condensateurs 82 sont connectés en série entre les deux premières bornes 40 et sont reliés entre eux par un point de référence 88. Chaque bras de commutation 84 est connecté entre la deuxième borne V+, V- correspondante et une première borne 40 respective. Chaque bras de commutation 84 comprend deux interrupteurs électroniques bidirectionnels 74 connectés en série et reliés entre eux par un point milieu 90. Chaque diode 86A, 86B est connectée entre le point de référence 88 et un point milieu 90 respectif. La première diode 86A a son anode reliée au point de référence 88 et sa cathode reliée au point milieu 90 respectif. La seconde diode 86B a son anode reliée au point milieu 90 respectif et sa cathode reliée au point de référence 88.

En variante, chaque branche de commutation 72 forme un onduleur de tension à deux niveaux et comporte deux bras de commutation. Chaque bras de commutation est disposé entre une première borne 40 respective et la deuxième borne V+, V- correspondante, et comporte un interrupteur électronique commandable 74.

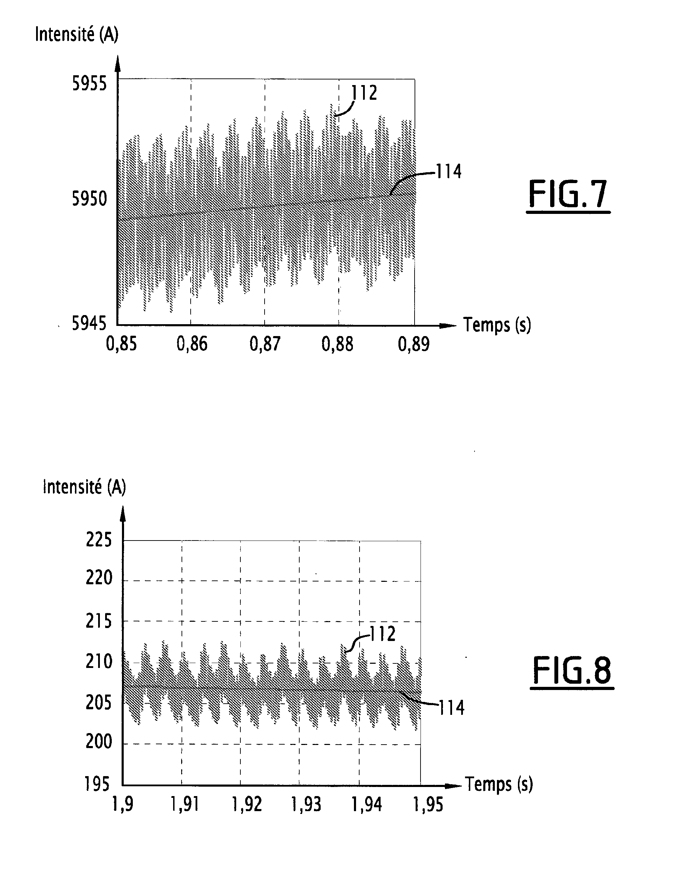

Le fonctionnement du système d'alimentation 10 et de ses convertisseurs 20 va désormais être expliqué à l'aide des figures 3 à 12.

La figure 3 illustre un ensemble de courbes 100, 102, 104 représentant, sur une courte période de temps, la tension entre le point de référence 88 et le point milieu 76 de chacune des branches de commutation 72. La figure 3 illustre également un ensemble de courbes 106, 108, 110 représentant, sur la même période de temps, l'intensité du courant circulant dans chacune des branches de commutation 72 d'un module.

Les courbes 100 et 106 correspondent à la première branche de commutation 72 d'un module, les courbes 102 et 108 correspondant à la deuxième branche, et les courbes 104 et 110 correspondant à la troisième branche. On note ainsi qu'à la fois la tension et l'intensité du courant circulant dans la deuxième branche sont déphasées de 2π/3 radians, ou encore de 120°, par rapport à la tension et l'intensité du courant circulant dans la première branche. De manière analogue, la tension et l'intensité du courant circulant dans la troisième branche sont déphasées de 2π/3 radians par rapport à la tension et l'intensité du courant circulant dans la deuxième branche. De manière analogue encore, la tension et l'intensité du courant circulant dans la première branche sont déphasées de 2π/3 radians par rapport à la tension et l'intensité du courant circulant dans la troisième branche.

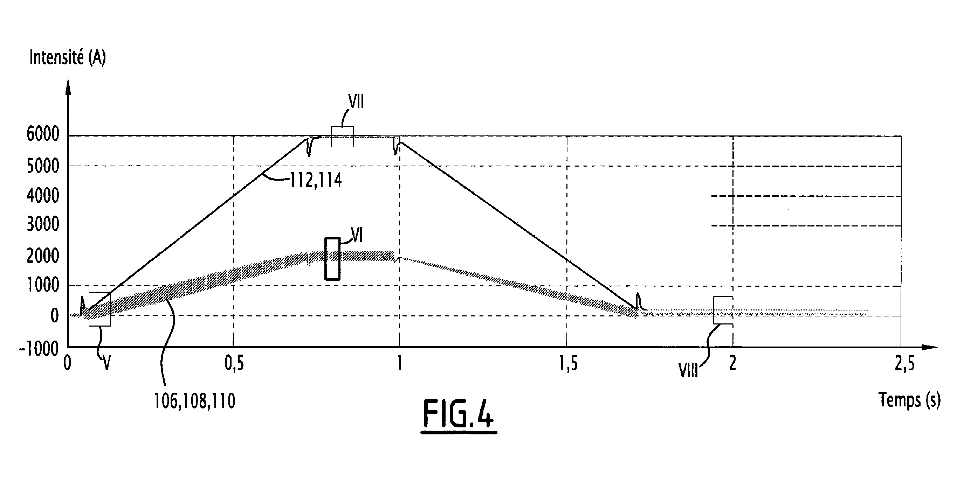

La figure 4 représente les courbes 106, 108 et 110 d'intensité du courant dans chacune des branches de commutation 72 d'un module respectif, pour une période de temps de 2,5 secondes correspondant à une impulsion complète du courant délivré à la charge 12 par le système d'alimentation 10.

Une courbe 112 illustrant l'intensité du courant circulant en sortie des hacheurs 20 et entrée du filtre 26, et une courbe 114 illustrant l'intensité du courant filtré en sortie du filtre 26 sont également représentées sur la figure 4. Le courant circulant à travers une deuxième borne V+, V- est la somme des courants circulant dans chacune des branches de commutation 72 du module correspondant à la deuxième borne V+, V- respective.

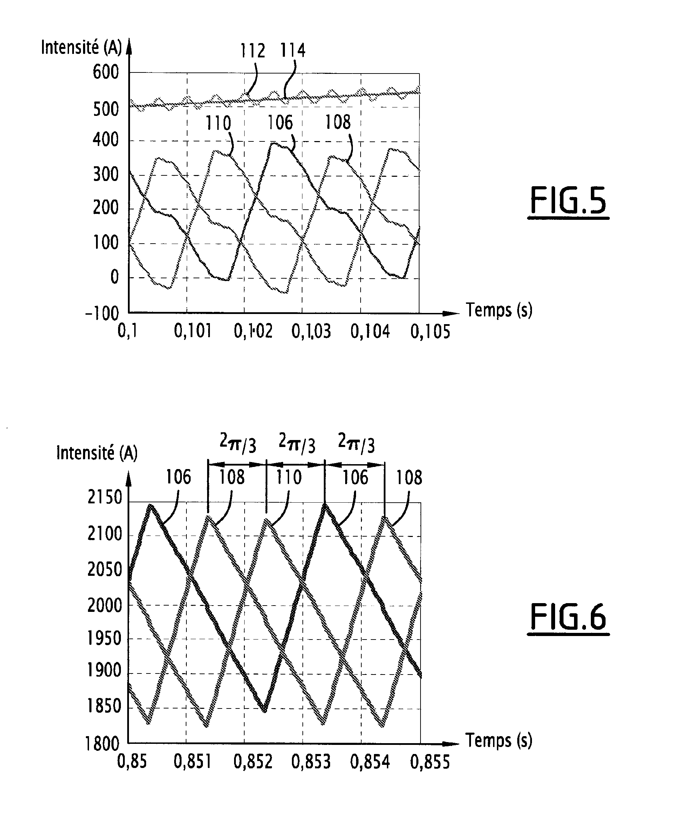

Les figures 5 et 6 sont des agrandissements respectifs des zones encadrées V et VI de la figure 4 et illustrent le déphasage de 2π/3 radians, ou encore de 120°, entre les courbes 106, 108, 110 de l'intensité du courant dans chacune des branches de commutation 72 respectives.

Les figures 5, 7 et 8 sont des agrandissements respectifs des zones encadrées V, VII et VIII de la figure 4, et illustrent le filtrage du courant en sortie des hacheurs par le filtre 26. En sortie des onduleurs 20 et en entrée du filtre 26, le courant représenté par la courbe 112 présente des oscillations d'environ ± 5 A quel que soit l'instant au cours de la période de 2,5 secondes correspondant à l'impulsion de courant. Le filtre 26 permet alors d'atténuer ces oscillations, et le courant filtré, représenté par la courbe 114, ne présente plus de telles oscillations.

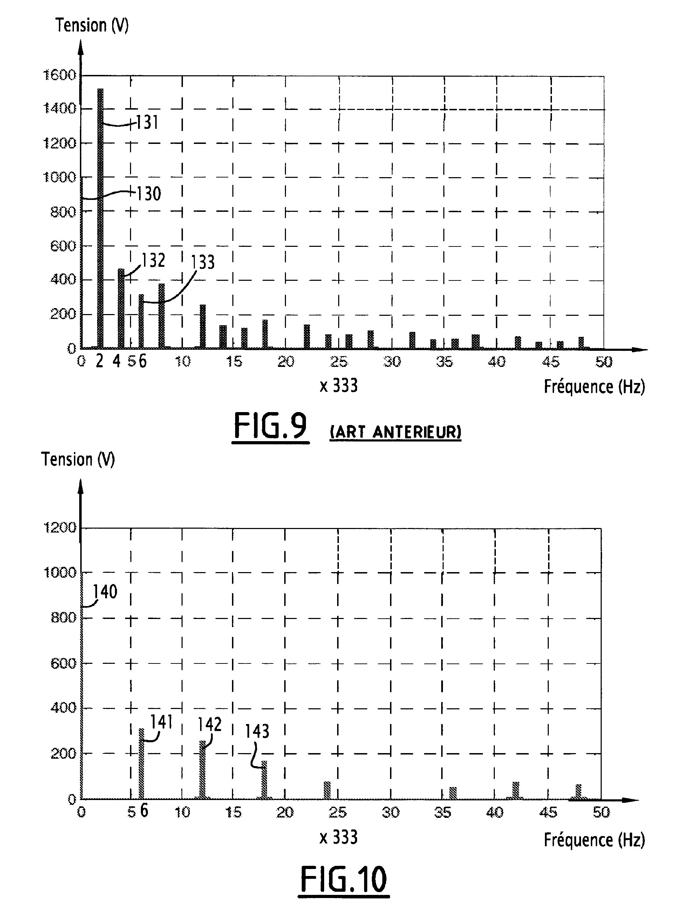

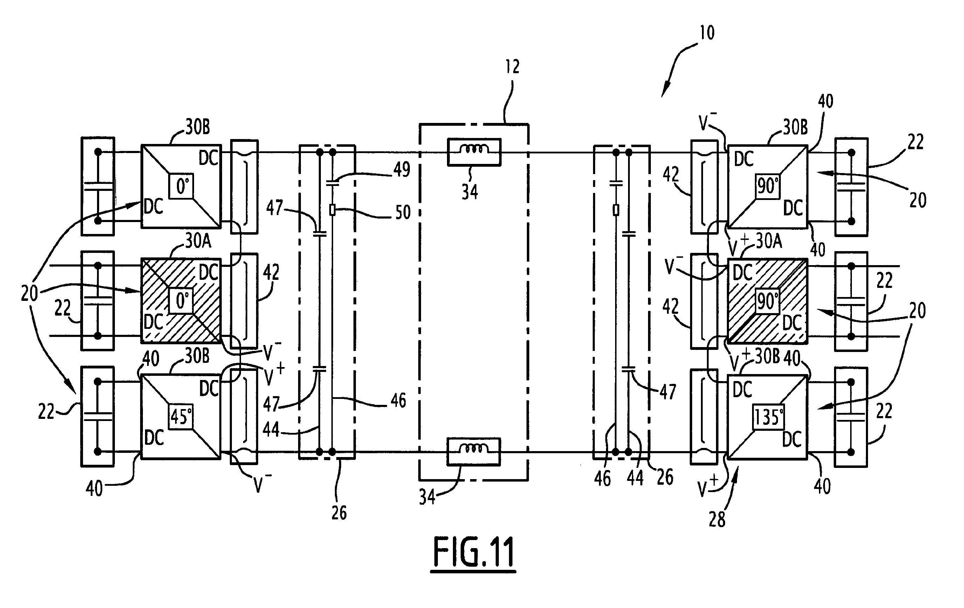

Sur la figure 9, la représentation spectrale de la tension délivrée par un convertisseur de l'état de la technique comporte un fondamental 130 et une pluralité d'harmoniques 131, 132, 133 correspondant à des multiples de la fréquence F de commutation égale à 333 Hz dans l'exemple de réalisation de la figure 11. L'amplitude du premier harmonique 131 est sensiblement égale à 1500 V et est bien supérieure à l'amplitude du fondamental 130 sensiblement égale à 1000 V. La présence de ces harmoniques à basse fréquence, notamment le premier harmonique 131 correspondant à une fréquence de 666 Hz et le deuxième harmonique 132 correspondant à une fréquence d'environ 1,3 KHz, entraînent d'importantes oscillations de la tension en sortie du système d'alimentation et des convertisseurs de l'état de la technique.

Sur la figure 10, la représentation spectrale de la tension délivrée par un convertisseur 20 selon l'invention présente toujours un fondamental 140 d'amplitude sensiblement égale à 1000 V, et des harmoniques 141, 142, 143. Le premier harmonique 141 pour la tension en sortie d'un convertisseur 20 selon l'invention correspond au troisième harmonique 133 de la tension en sortie d'un convertisseur de l'état de la technique. Autrement dit, le convertisseur 20 selon l'invention permet de réduire fortement, voire de supprimer, les harmoniques correspondant aux fréquences de 666 Hz et de 1,3 kHz. Le premier harmonique apparent correspond alors à une fréquence de 2000 Hz. Le système d'alimentation 10 selon l'invention permet de réduire les oscillations de la tension délivrée en sortie aux bornes de la charge 12.

La bande passante des filtres 26 n'est alors pas dimensionnée pour réduire des harmoniques de tension à basse fréquence, puisque les harmoniques sont réduites de par les déphasages entre les lois de commutation de chacun des modules 70 ou de chacune des branches 72. La bande passante des filtres 26 est uniquement dimensionnée en fonction de la bande passante de commande en tension des convertisseurs 20. La valeur de la bande passante des filtres 26 est plus importante que celle qui aurait été choisie pour réduire les harmoniques, et est, par exemple, égale à 180Hz.

On conçoit ainsi que le convertisseur 20 selon l'invention permet de réduire les harmoniques à basse fréquence du courant délivré.

La figure 11 illustre un deuxième mode de réalisation de l'invention pour lequel les éléments analogues au premier mode de réalisation, décrits précédemment, sont repérés par des références identiques, et ne sont donc pas décrits à nouveau.

Selon le deuxième mode de réalisation, les lois de commande de chacun des deux premiers convertisseurs 30A dits convertisseurs de charge et connectés en sortie des redresseurs 18 sont de même fréquence F et sont déphasées l'une de l'autre. Les lois de commande de chacun des (M - 2) deuxièmes convertisseurs 30B dits convertisseurs flottants sont de même fréquence F et sont déphasées l'une de l'autre.

Les lois de commande d'un des deux convertisseurs de charge 30A et d'un des (M - 2) convertisseurs flottants 30B sont de même fréquence et sont en phase.

Le déphasage entre les lois de commande de chacun des deux convertisseurs de charge 30A est, par exemple, égal à 90°.

Le déphasage entre les lois de commande de chacun des (M - 2) convertisseurs flottants 30B est, par exemple, égal à 180°/ (M - 2).

Dans l'exemple de réalisation de la figure 11, M est égal à 6. Le déphasage entre les lois de commande de chacun des quatre convertisseurs flottants 30B est alors égal à 45°. Autrement dit, en prenant comme convention que le premier des convertisseurs flottants 30B correspond à un angle de 0°, le deuxième des convertisseurs flottants 30B correspond à un angle de 45° et est donc déphasé de 45° par rapport au premier des convertisseurs flottants 30B. De manière analogue, le troisième des convertisseurs flottants 30B correspond à un angle de 90°, et le quatrième et dernier des convertisseurs flottants 30B correspond à un angle de 135°.

Dans l'exemple de réalisation de la figure 11, les lois de commande de chacun des deux ensembles de convertisseurs 28 sont de même fréquence F et sont déphasées l'une de l'autre. Le déphasage entre les lois de commande de chacun des deux ensembles 28 est égal à 90°.

Le fonctionnement de ce deuxième mode de réalisation est identique à celui du premier mode de réalisation, et n'est donc pas décrit à nouveau.

Les avantages de ce deuxième mode de réalisation comprennent ceux du premier mode de réalisation. Le deuxième mode de réalisation permet en outre de réduire encore les harmoniques à basse fréquence du courant délivré par le système d'alimentation 10 selon l'invention.

En effet, la représentation spectrale, non représentée, de la tension délivrée à la charge 12 par les deux convertisseurs de charge 30A présente un premier harmonique pour une fréquence voisine de 4 kHz. Les harmoniques correspondant à des multiples de la fréquence F égale à 333 Hz et compris entre 666 Hz et 3,3 kHz sont fortement réduits, voire supprimés, de par les déphasages entre les lois de commutation de chacun des modules 70 ou de chacune des branches 72 ainsi que de par le déphasage entre les lois de commande de chacun des deux convertisseurs de charge 30A.

La représentation spectrale, non représentée, de la tension délivrée à la charge 12 par les (M-2) convertisseurs flottants 30B présente un premier harmonique pour une fréquence voisine de 8 kHz. Les harmoniques correspondant à des multiples de la fréquence F égale à 333 Hz et compris entre 666 Hz et 7,3 kHz sont fortement réduits, voire supprimés, de par les déphasages entre les lois de commutation de chacun des modules 70 ou de chacune des branches 72 ainsi que de par le déphasage entre les lois de commande de chacun des (M-2) convertisseurs flottants 30B.

Le système d'alimentation 10 selon ce deuxième mode de réalisation permet ainsi de réduire encore les harmoniques à basse fréquence.

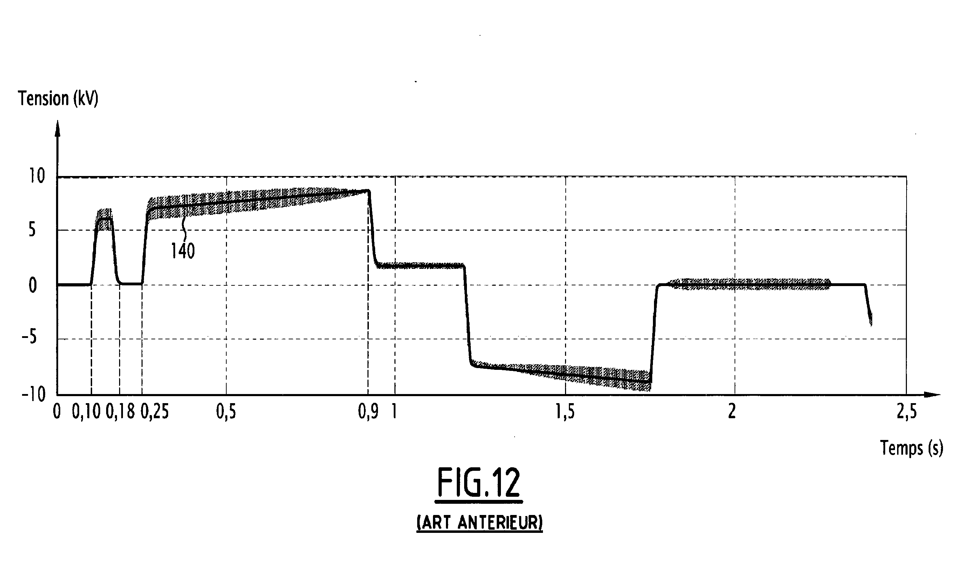

La figure 12 représente une courbe 140 illustrant la tension aux bornes de la charge pour un système d'alimentation de l'état de la technique durant une impulsion de courant. Pour certains intervalles de temps, notamment entre 0,10 et 0,18 seconde et entre 0,25 et 0,9 seconde, la tension aux bornes de la charge présente de fortes oscillations d'environ ± 1000 V. Le courant délivré par le système d'alimentation de l'état de la technique nécessite donc d'être filtré de manière importante avant d'être fourni à la charge. Le système d'alimentation de l'état de la technique doit alors être associé à un filtre supplémentaire.

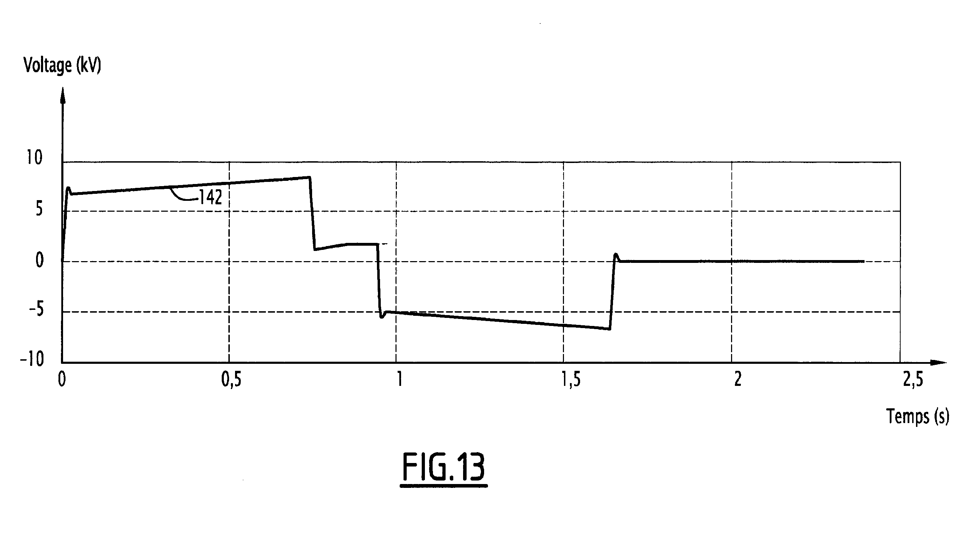

La figure 13 illustre de manière analogue à la figure 12 une courbe 142 représentant la tension aux bornes de la charge pour le système d'alimentation 10 selon l'invention. La tension aux bornes de la charge 12 ne présente pas d'oscillation visible en utilisant la même échelle que pour la figure 12, quel que soit l'intervalle de temps observé au cours de l'impulsion de courant. Cette absence d'oscillations est liée à l'absence d'harmoniques à basse fréquence, notamment entre 0 et 4 kHz. Le système d'alimentation 10 selon ce deuxième mode de réalisation de l'invention permet ainsi de réduire encore les oscillations de la tension délivrée en sortie aux bornes de la charge 12.

La bande passante des filtres 26 n'est pas dimensionnée en fonction des harmoniques de tension, puisque les harmoniques sont réduites de par les déphasages entre les lois de commutation de chacun des modules 70 ou de chacune des branches 72 et de par les déphasages entre les lois de commande des convertisseurs 30A, 30B. La bande passante des filtres 26 est uniquement dimensionnée en fonction de la bande passante de commande en tension des convertisseurs 30A, 30B. La valeur de la bande passante des filtres 26 est plus importante que celle qui aurait été choisie pour réduire les harmoniques, et est, par exemple, égale à 180Hz.

On conçoit ainsi que l'invention permet de proposer un système d'alimentation permettant de réduire les harmoniques à basse fréquence du courant délivré.

En variante, le système d'alimentation comporte un seul dispositif d'alimentation, ou encore plus de deux dispositifs d'alimentation.

## Revendications

1. Convertisseur (20) d'un courant continu en un autre courant continu, du type comprenant :
- deux premières bornes (40), deux deuxièmes bornes (V+, V-),
- deux modules (70) formant un pont en H, chaque module étant connecté entre les deux premières bornes (40) d'une part et une deuxième borne (V+, V-) respective d'autre part, chaque module (70) comprenant au moins une branche de commutation (72), chaque branche de commutation (72) comportant au moins deux interrupteurs électroniques commandables (74) connectés en série entre les premières bornes (40) et reliés entre eux par un point milieu (76) connecté à la deuxième borne (V+, V-) correspondante,
- des moyens (80) de commande des interrupteurs électroniques (74) des modules, chacun suivant une loi de commutation,
**caractérisé en ce que** les lois de commutation de chacun des modules (70) sont de même fréquence (F) et sont déphasées l'une de l'autre.

2. Convertisseur (20) selon la revendication 1, dans lequel le déphasage entre les lois de commutation de chacun des modules (70) est égal à 180°.

3. Convertisseur (20) selon la revendication 1 ou 2, dans lequel chaque module (70) du pont en H comporte N branches de commutation (72), N étant strictement supérieur à 1, et dans lequel les lois de commutation de chacune des N branches (72) du module sont de même fréquence (F) et sont toutes déphasées l'une de l'autre.

4. Convertisseur (20) selon la revendication 3, dans lequel le déphasage entre les lois de commutation de chacune des N branches (72) du module est égal à 360 °/N.

5. Système (10) d'alimentation d'une charge (12), du type comprenant :
- au moins un transformateur de tension alternative (14) relié à un réseau électrique (16),
- au moins un redresseur de tension (18) connecté en sortie du transformateur de tension (14),
- au moins un convertisseur (20) d'un courant continu en un autre courant continu connecté aux bornes de la charge (12), au moins un convertisseur (30A) étant connecté en sortie du redresseur de tension (18),
- au moins un condensateur de stockage (22) monté en parallèle du ou des convertisseurs (20), et
- des moyens (24) de commande du ou des convertisseurs, chacun suivant une loi de commande,
**caractérisé en ce qu'**au moins un des convertisseurs (20) est conforme à l'une quelconque des revendications précédentes.

6. Système (10) selon la revendication 5, dans lequel chaque convertisseur (20) est conforme à l'une quelconque des revendications 1 à 4.

7. Système (10) selon la revendication 5 ou 6 comprenant :
- deux transformateurs (14) connectés en parallèle au réseau électrique (16),
- deux redresseurs (18), chacun étant connecté en sortie d'un transformateur (14) respectif,
- M convertisseurs (20), M étant un nombre supérieur ou égal à 4, un unique convertisseur (30A) étant connecté en sortie de chaque redresseur (18), les (M - 2) autres convertisseurs (30B) n'étant pas connectés en sortie des redresseurs (18) et étant connectés en série avec les convertisseurs (30A) connectés en sortie de chaque redresseur (18), et
- M condensateurs de stockage (22).

8. Système (10) selon la revendication 7, dans lequel les lois de commande de chacun des deux convertisseurs (30A) connectés en sortie des redresseurs (18) sont de même fréquence (F) et sont déphasées l'une de l'autre.

9. Système (10) selon la revendication 8, dans lequel le déphasage entre les lois de commande de chacun des deux convertisseurs (30A) connectés en sortie des redresseurs (18) est égal à 90°.

10. Système (10) selon l'une quelconque des revendications 7 à 9, dans lequel les lois de commande de chacun des (M - 2) autres convertisseurs (30B) sont de même fréquence (F) et sont déphasées l'une de l'autre.

11. Système (10) selon la revendication 10, dans lequel le déphasage entre les lois de commande de chacun des (M - 2) autres convertisseurs (30B) est égal à 180°/(M - 2).

12. Système (10) selon l'une quelconque des revendications 7 à 11, dans lequel les lois de commande d'un des deux convertisseurs (30A) connectés en sortie des redresseurs (18) et d'un des (M - 2) autres convertisseurs (30B) sont de même fréquence (F) et sont en phase.

13. Système (10) selon l'une quelconque des revendications 7 à 12, dans lequel M est un nombre pair, et dans lequel les M convertisseurs (20) sont répartis en deux ensembles de convertisseurs (28), chaque ensemble (28) comportant un convertisseur (30A) connecté en sortie d'un redresseur (18) respectif et (M - 2)/2 autres convertisseurs (30B), les M/2 convertisseurs (20, 30A, 30B) de chaque ensemble (28) étant connectés en série.

14. Système (10) selon la revendication 13, dans lequel les lois de commande de chacun des deux ensembles de convertisseurs (28) sont de même fréquence (F) et sont déphasées l'une de l'autre.

15. Système (10) selon la revendication 14, dans lequel le déphasage entre les lois de commande de chacun des deux ensembles de convertisseurs (28) est égal à 90°.

## Patentansprüche

1. Wandler (20) eines Gleichstroms in einen anderen Gleichstrom des Typs aufweisend:
- zwei erste Anschlüsse (40), zwei zweite Anschlüsse (V+, V-),
- zwei Module (70), die eine H-Brücke bilden, wobei jedes Modul einerseits zwischen den beiden ersten Anschlüssen (40) und andererseits an einen der zweiten Anschlüsse (V+, V-) angeschlossen ist, wobei jedes Modul (70) zumindest einen Kommutierungszweig (72) aufweist, wobei jeder Kommutierungszweig (72) wenigstens zwei ansteuerbare elektronische Schalter (74) aufweist, die in Reihe zwischen die ersten Anschlüsse (40) geschaltet sind und miteinander über einen Mittelpunkt (76) verbunden sind, der mit dem zugeordneten zweiten Anschluss (V+, V-) verbunden ist,
- Steuermittel (80) für die elektronischen Schalter (74) der Module, von denen jedes einem Kommutierungsgesetz folgt,
**dadurch gekennzeichnet, dass** die Kommutierungsgesetze von jedem der Module (70) dieselbe Frequenz (F) aufweisen und zueinander phasenverschoben sind.

2. Wandler (20) nach Anspruch 1, bei dem die Phasenverschiebung zwischen den Kommutierungsgesetzen von jedem der Module (70) gleich 180° ist.

3. Wandler (20) nach Anspruch 1 oder 2, bei dem jedes Modul (70) der H-Brücke N Kommutierungszweige (72) aufweist, wobei N strikt größer als 1 ist, und bei dem die Kommutierungsgesetze von jedem der N Zweige (72) des Moduls die gleiche Frequenz (F) aufweisen und alle zueinander phasenverschoben sind.

4. Wandler (20) nach Anspruch 3, bei dem die Phasenverschiebung zwischen den Kommutierungsgesetzen von jedem der N Zweige (72) des Moduls gleich 360°/N ist.

5. System (10) zur Versorgung einer Last (12) des Typs aufweisend:
- mindestens einen Wechselspannungstransformator (14), der mit einem elektrischen Netz (16) verbunden ist,
- mindestens einen Spannungsgleichrichter (18), der an den Ausgang des Spannungstransformators (14) angeschlossen ist,
- mindestens einen Wandler (20) eines Gleichstroms in einen anderen Gleichstrom, der mit den Anschlüssen der Last (12) verbunden ist, wobei mindestens einen Wandler (30A) an einen Ausgang des Spannungsgleichrichters (18) angeschlossen ist,
- mindestens einen Speicherkondensator (22), der parallel zu dem oder den Wandlern (20) geschaltet ist, und
- Steuermittel (24) des oder der Wandler, wobei jedes einem Steuergesetz folgt,
**dadurch gekennzeichnet, dass** zumindest einer der Wandler (20) irgendeinem der vorhergehenden Ansprüche entspricht.

6. System (10) nach Anspruch 5, bei dem jeder Wandler (20) irgendeinem der Ansprüche 1 bis 4 entspricht.

7. System (10) nach Anspruch 5 oder 6 aufweisend:
- zwei Transformatoren (14) die parallel zueinander mit dem elektrischen Netz (16) verbunden sind,
- zwei Gleichrichter (18), wobei jeder an einen jeweiligen Ausgang eines Transformators (14) angeschlossen ist,
- M Wandler (20), wobei M eine Anzahl größer oder gleich 4 ist, wobei mit dem Ausgang jedes Gleichrichters (18) ein einzelner Wandler (30A) verbunden ist, wobei die (M-2) anderen Wandler (30B) nicht an den Ausgang der Gleichrichter (18) angeschlossen sind und in Reihe mit den Wandlern (30A) geschaltet sind, die an den Ausgang jedes Gleichrichters (18) angeschlossen sind, und
- M Speicherkondensatoren (22).

8. System (10) nach Anspruch 7, bei dem die Steuergesetze jedes der beiden Wandler (30A), die an den Ausgang der Gleichrichter (18) angeschlossen sind, dieselbe Frequenz (F) aufweisen und zueinander phasenverschoben sind.

9. System (10) nach Anspruch 8, bei dem die Phasenverschiebung zwischen den Steuergesetzen von jedem der beiden Wandler (30A), die mit den Ausgängen der Gleichrichter (18) verbunden sind, gleich 90° beträgt.

10. System (10) nach irgendeinem der Ansprüche 7 bis 9, bei dem die Steuergesetze von jedem der (M-2) anderen Wandler (30B) dieselbe Frequenz (F) aufweisen und zueinander phasenverschoben sind.

11. System (10) nach Anspruch 10, bei dem die Phasenverschiebung zwischen den Steuergesetzen von jedem der (M-2) anderen Wandler (30B) gleich 180°/(M-2) ist.

12. System (10) nach irgendeinem der Ansprüche 7 bis 11, bei dem die Steuergesetze von einem der beiden Wandler (30A), die an den Ausgang der Gleichrichter (18) angeschlossen sind und von einem der (M-2) anderen Wandler (30B) dieselbe Frequenz (F) aufweisen und in Phase sind.

13. System (10) nach irgendeinem der Ansprüche 7 bis 12, bei dem M eine gerade Zahl ist und bei dem die M Wandler (20) in zwei Wandlergruppen (28) aufgeteilt sind, wobei jede Gruppe (28) einen Wandler (30A), der an den Ausgang eines jeweiligen Gleichrichters (18) angeschlossen ist und (M-2)/2 andere Wandler (30B) aufweist, wobei die M/2 Wandler (20, 30A, 30B) jeder Gruppe (28) in Reihe geschaltet sind.

14. System (10) nach Anspruch 13, bei dem die Steuergesetze von jeder der beiden Wandlergruppen (28) dieselbe Frequenz (F) aufweisen und zueinander phasenverschoben sind.

15. System (10) nach Anspruch 14, bei dem die Phasenverschiebung zwischen den Steuergesetzen von jeder der beiden Wandlergruppen (28) gleich 90° ist.

## Claims

1. Converter (20) for converting continuous current into another continuous current, of the type comprising:
- two first terminals (40), two second terminals (V+, V-),
- two modules (70) forming an H bridge, each module being connected between the first two terminals (40) on one side and a respective second terminal (V+, V-) on the other, each module (70) comprising at least one switching branch (72), each switching branch (72) comprising at least two controllable electronic switches (74) connected in series between the first terminals (40) and connected together by a middle point (76) connected to the corresponding second terminal (V+, V-),
- means (80) for controlling the electronic switches (74) of the modules, each following a switching law,
**characterized in that** the switching laws of each of the modules (70) have the same frequency (F) and are phase-offset from each other.

2. Converter (20) according to claim 1, wherein the phase offset between the switching laws of each of the modules (70) is equal to 180°.

3. Converter (20) according to claim 1 or 2, wherein each module (70) of the H bridge comprises N switching branches (72), N being strictly greater than 1, and wherein the switching laws of each of the N branches (72) of the module have the same frequency (F) and are all phase-offset from each other.

4. Converter (20) according to claim 3, wherein the phase offset between the switching laws of each of the N branches (72) of the module is equal to 360°/N.

5. System (10) for supplying a load (12), of the type comprising:
- at least one alternating voltage transformer (14) linked to an electrical network (16),
- at least one voltage rectifier (18) connected at the output from the voltage transformer (14),
- at least one converter (20) for converting a continuous current into another continuous current and connected to the terminals of the load (12), at least one converter (30A) being connected at the output from the voltage rectifier (18),
- at least one storage condenser (22) mounted in parallel to the converter(s) (20), and
- means (24) for controlling the converter(s), each following a control law, **characterized in that** at least one of the converters (20) complies with any of the preceding claims.

6. System (10) according to claim 5, wherein each converter (20) complies with any of claims 1 to 4.

7. System (10) according to claim 5 or 6, comprising:
- two transformers (14) connected in parallel to the electrical network (16),
- two rectifiers (18), each being connected at the output from a respective transformer (14),
- M converters (20), M being a number greater than or equal to 4, an individual converter (30A) being connected at the output from each rectifier (18), the (M-2) other converters (30B) not being connected at the output from the rectifiers (18) and being connected in series with the converters (30A) connected at the output from each rectifier (18), and
- M storage condensers (22).

8. System (10) according to claim 7, wherein the control laws of each of the two converters (30A) connected at the output from the rectifiers (18) have the same frequency (F) and are phase-offset from each other.

9. System (10) according to claim 8, wherein the phase offset between the control laws of each of the two converters (30A) connected at the output from the rectifiers (18) is equal to 90°.

10. System (10) according to any of claims 7 - 9, wherein the control laws of each of the (M-2) other converters (30B) have the same frequency (F) and are phase-offset from each other.

11. System (10) according to claim 10, wherein the phase offset between the control laws of each of the (M-2) other converters (30B) is equal to 180°/(M-2).

12. System (10) according to any of claims 7 to 11, wherein the control laws of one of the two converters (30A) connected at the output from the rectifiers (18) and one of the (M-2) other converters (30B) have the same frequency (F) and are in phase.

13. System (10) according to any of claims 7 to 12, wherein M is an even number, and wherein the M converters (20) are divided into two sets (28) of converters, each set (28) comprising a converter (30A) connected at the output from a respective rectifier (18) and (M-2)/2 other converters (30B), the M/2 converters (20, 30A, 30B) of each set (28) being connected in series.

14. System (10) according to claim 13, wherein the control laws of each of the two sets (28) of converters have the same frequency (F) and are phase-offset from each other.

15. System (10) according to claim 14, wherein the phase offset between the control laws of each of the two sets (28) of converters is equal to 90°.
